# EUROPEAN PATENT APPLICATION

(11) **EP 2 743 890 A1**
(43) Date of publication of application: **18.06.2014**
(21) Application number: 12823564.5
(22) Date of filing: 11.07.2012
(51) Int. Cl.: G06T 11/80, G06F 3/048, H04N 1/387

(54) **INFORMATION PROCESSING DEVICE AND INFORMATION PROCESSING METHOD**

(30) Priority: 12.08.2011 JP 2011176601
(71) Applicant: Sony Corporation, Tokyo 108-0075 (JP)
(72) Inventor: MIYAMA, Seiji, Tokyo 108-0075 (JP); KAJIMOTO, Masato, Tokyo 108-0075 (JP); KIMOTO, Masashi, Tokyo 108-0075 (JP); WATANABE, Hirofumi, Tokyo 141-0022 (JP)
(74) Representative: Müller - Hoffmann & Partner
(86) International application number: PCT/JP2012/004479
(87) International publication number: WO 2013/024563

(57) **Abstract**

[Object] To provide an information processing apparatus and an information processing method that are capable of realizing convenient cut-out processing.

[Solving Means] The information processing apparatus includes a storage unit, an output unit, and a generator. The storage unit associates, with a position information item in an entire image having an arbitrary resolution out of entire images generated at a plurality of different resolutions with respect to a single target object and an information item of at least the one resolution of the entire image, a mark information item being an additional information item of a user, and stores the position information item and the information item of the resolution with which the mark information item is associated, as information items of a recording position and a recording resolution. The output unit outputs at least a partial image of the entire image having the arbitrary resolution to be displayed as an output target image. The generator cuts out an image of an area in the output target image, which includes the recording position with which the mark information item is associated, from the output target image, to thereby generate a cut-out image.

## Description

### Technical Field

The present technology relates to an information processing apparatus and an information processing method that are capable of cutting out a partial image from a huge image.

### Background Art

An image processing apparatus described in Patent Document 1 learns composition information of a cut-out range of a user from an original image, creates a trimming rule obtained by the learning, and stores this. Then, based on the trimming rule, the image processing apparatus cuts out an image of a portion reflecting user's preference or habit from the original image (see paragraph [0066] in specification of Patent Document 1, for example).

Patent Document 1: Japanese Patent Application Laid-open No. 2009-245404

### Summary of Invention

### Problem to be solved by the Invention

As in the above, it is useful to automatically cut out the partial image from the original entire image, and it is desirable to realize a further convenient cut-out method.

Therefore, it is an object of the present technology to provide an information processing apparatus and an information processing method that are capable of realizing convenient cut-out processing.

Otherwise, it is desirable to realize a certain function using information of a partial image in an entire image.

In addition, it is another object of the present technology to provide an information processing apparatus capable of realizing a convenient function using information of a partial image in an entire image.

### Means for solving the Problem

In order to achieve the above-mentioned objects, an information processing apparatus includes a storage unit, an output unit, and a generator.

The storage unit associates, with a position information item in an entire image having an arbitrary resolution out of entire images generated at a plurality of different resolutions with respect to a single target object and an information item of at least the one resolution of the entire image, a mark information item being an additional information item of a user, and stores the position information item and the information item of the resolution with which the mark information item is associated, as information items of a recording position and a recording resolution.

The output unit outputs at least a partial image of the entire image having the arbitrary resolution to be displayed as an output target image.

The generator cuts out an image of an area in the output target image, which includes the recording position with which the mark information item is associated, from the output target image, to thereby generate a cut-out image.

In the present technology, the generator cuts out the partial image of the output target image including the position information item in the entire image with which the mark information item is associated, to thereby generate the cut-out image. Therefore, the user is able to view a cut-out image associated with a mark information item, which is convenient.

The concept of "associate A with B" includes both meanings of "associate A with an ID identifying B" and "associate an ID identifying A with B or an ID identifying B."

The generator may generate the cut-out image from the output target image having a resolution specified by the user. This enables the generator to generate a cut-out image having a resolution specified by the user, to thereby generate an image easy for the user to view.

The generator may generate the cut-out image in a size specified by the user.

The generator may cut out, when an output position group constituting the output target image to be output includes a plurality of recording positions with which a plurality of mark information items are associated, images of areas including information items of the plurality of recording positions from the output target image for each of the plurality of recording positions. This enables the generator to generate cut-out images corresponding to the recording positions of the plurality of mark information items.

The generator may cut out images of areas including the information item of the plurality of recording positions from the output target image for each of a plurality of recording resolutions corresponding to the plurality of recording positions. This enables the generator to generate cut-out images corresponding to the recording positions and recording resolutions of the plurality of mark information items.

The generator may generate, when an output position group constituting the output target image to be output includes a plurality of recording positions with which a plurality of mark information items are associated and at least one recording resolution of a plurality of recording resolutions corresponding to the plurality of recording positions is equal to or larger than an output resolution being the resolution of the output target image, an image of an area including the recording position corresponding to the at least one recording resolution as the cut-out image. This enables the user to obtain a cut-out image having a recording resolution, which is appropriate to the resolution of the current output target image.

The generator may generate, when an output position group constituting the output target image to be output includes a plurality of recording positions with which a plurality of mark information items are associated and an image having a set cut-out size includes the plurality of recording positions, an image of an area including the plurality of recording positions as the single cut-out image. This enables the generator to generate a single cut-out image including the plurality of mark information items.

The generator may generate, when a plurality of recording resolutions corresponding to the plurality of recording positions are equal or within a range of a predetermined difference, an image of an area including the plurality of recording positions as the single cut-out image.

The generator may generate the cut-out image such that a center of gravity of the plurality of recording positions is a center of the cut-out image. This enables the generator to generate a cut-out image including recording positions of a plurality of mark information items arranged in good balance.

The storage unit may associate the mark information item with each resolution range constituted of at least two resolutions including an output resolution being the resolution of the output target image output by the output unit and store an information item of the resolution range with which the mark information item is associated, as an information item of a recording resolution range. This enables the storage unit to store one mark information item and an information item of one resolution range corresponding thereto.

The generator may generate, when an output position group constituting the output target image to be output includes a plurality of recording positions with which a plurality of mark information items are associated, an image of an area specified by the user, which is an image of an area including at least one recording position with which at least one the mark information item of the plurality of mark information items is associated, as the cut-out image. This enables the user to arbitrarily specify an area for cutting out and generate a cut-out image.

The generator may generate, when an output position group constituting the output target image to be output includes a plurality of recording positions with which a plurality of mark information items are associated, an image of an area including one or more the recording positions, which correspond to a keyword included in the mark information item including a specification keyword specified by the user out of the plurality of recording positions, as the cut-out image. This enables the user to select a desired mark information item with a keyword.

The information processing apparatus may further include a metadata generator that generates metadata with respect to the cut-out image generated by the generator. This enables the information processing apparatus to perform various types of processing using metadata embedded in a cut-out image.

The output unit may output the output target image with which a mark image is combined as a part or whole of the mark information item. Thus, an information item expressing (the presence of) a mark information item is visualized as a mark image, and hence the user can access the mark information item based on the mark image while viewing the output target image.

The generator may cut out an image of an area having a size including the mark image from the entire image, to thereby generate the cut-out image. In this case, the output unit combines the mark image with the generated cut-out image.

The information processing apparatus may further include an acquisition unit and a candidate screen generator. The acquisition unit acquires an information item of an input operation by the user for starting generation of the cut-out image by the generator. The candidate screen generator generates, when the acquisition unit acquires the information item of the input operation and the generator starts the generation of the cut-out image, a candidate screen for causing the user to select a storage target of the cut-out image.

Another information processing apparatus according to the present technology includes an output unit, an acquisition unit, and a generator.

The output unit outputs, out of entire images generated at a plurality of different resolutions with respect to a single target object, at least a partial image of the entire image having an arbitrary resolution to be displayed as an output target image.

The acquisition unit obtains an information item of an operation state by a user, which includes at least a position information item in the entire image specified by the user for causing the output unit to output the output target image.

The generator cuts out, out of a plurality of output target images different from each other in at least one of the position information item and an information item of the resolution, which are output by the output unit according to a sequence of continuous or discontinuous specification operations of the user, based on the information item of the operation state obtained by the acquisition unit, at least a partial area of one or more the output target images from the entire image, to thereby generate a cut-out image.

That is, when a predetermined operation by the user is performed or not performed for a predetermined period of time, the generator is capable of generating an image of at least a partial area of one or more output target images out of a plurality of output target images on a viewing trajectory in the entire image by the user, as a cut-out image.

Another information processing apparatus according to the present technology includes an output unit, a generator, and a recording unit.

The output unit outputs, out of entire images generated at a plurality of different resolutions with respect to a single target object, at least a partial image of the entire image having an arbitrary resolution to be displayed as an output target image.

The generator cuts out at least a partial area of the output target image output by the output unit from the entire image according to an input operation by a user, to thereby generate a cut-out image.

The recording unit records a mark information item while the mark information item being associated with a position information item in the entire image and an information item of the resolution of the cut-out image generated by the generator.

In the present technology, the recording unit records the mark information item while the mark information item being associated with the cut-out image generated according to the input operation by the user. Therefore, it is possible to realize a function for viewing the cut-out images with the mark information items being used as indexes, a search function of the cut-out images based on the mark information items, and the like, that is, convenient functions using the cut-out images.

The above-mentioned information processing apparatuses may include an information item of a degree of depth by Z-stack instead of the information item of the "resolution" or in addition to the information item of the "resolution."

An information processing method according to the present technology includes associating, with a position information item in an entire image having an arbitrary resolution out of entire images generated at a plurality of different resolutions with respect to a single target object and an information item of at least the one resolution of the entire image, a mark information item being an additional information item of a user, and storing the position information item and the information item of the resolution with which the mark information item is associated, as information items of a recording position and a recording resolution.

At least a partial image of the entire image having the arbitrary resolution is output to be displayed as an output target image.

An image of an area in the output target image, which includes the position information item with which the mark information item is associated is cut out from the output target image, such that a cut-out image is generated.

Another information processing method according to the present technology includes outputting, out of entire images generated at a plurality of different resolutions with respect to a single target object, at least a partial image of the entire image having an arbitrary resolution to be displayed as an output target image.

An information item of an operation state by a user, which includes at least a position information item in the entire image specified by the user for outputting the output target image, is obtained.

Out of a plurality of output target images different from each other in at least one of the position information item and an information item of the resolution, which are output according to a sequence of continuous or discontinuous specification operations of the user, based on the obtained information item of the operation state, at least a partial area of one or more the output target images is cut out from the entire image, such that a cut-out image is generated.

### Effect of the Invention

As described above, according to the present technology, convenient cut-out processing can be performed.

According to the present technology, convenient functions using an information item of a partial image of an entire image.

### Brief Description of Drawings

[Fig. 1] Fig. 1 is a block diagram showing, for example, a configuration of hardware of a PC as an information processing apparatus including a mark information recording apparatus and a mark information presenting apparatus according to an embodiment of the present technology.
[Fig. 2] Fig. 2 is a view showing an image pyramid structure for explaining a display principle of images having a pyramid structure.
[Fig. 3] Fig. 3 is a view for explaining a procedure of generating an image group with this image pyramid structure.
[Fig. 4] Fig. 4 is a view showing an example of a size of each of an entire image and an output target image.
[Fig. 5] Fig. 5 is a block diagram showing a system configuration of the information processing apparatus.
[Fig. 6] Fig. 6 is a view showing a management table of mark information items managed by a mark information managing unit.
[Fig. 7] Fig. 7 is a view showing an example of an output target image, in which a mark image being a mark information item associated with an arbitrary position in the entire image.
[Fig. 8] Fig. 8 is a flowchart showing processing by an information processing apparatus according to an embodiment 1 of the present technology.
[Fig. 9] Fig. 9 shows a candidate screen of a list of cut-out images.
[Fig. 10] Fig. 10 shows an example of a screen for causing a user to specify a magnification, a size, and the like.
[Figs. 11] Figs. 11A to 11C are views showing images different in depth.
[Fig. 12] Fig. 12 is a flowchart showing processing by an information processing apparatus according to an embodiment 2 of the present technology.
[Fig. 13] Fig. 13 shows an example of a screen according to the embodiment 2.
[Fig. 14] Fig. 14 is a flowchart showing processing by an information processing apparatus according to an embodiment 3 of the present technology.
[Fig. 15] Fig. 15 shows an example of a screen according to the embodiment 3.
[Fig. 16] Fig. 16 shows a management table of mark information items, which is used in an embodiment 4 of the present technology.
[Fig. 17] Fig. 17 is a flowchart showing processing by an information processing apparatus according to an embodiment 5 of the present technology.
[Fig. 18] Fig. 18 shows an example of a screen according to the embodiment 5.
[Fig. 19] Fig. 19 is a flowchart showing processing by an information processing apparatus according to an embodiment 6 of the present technology.
[Fig. 20] Fig. 20 shows an example of a screen according to the embodiment 6.
[Fig. 21] Fig. 21 is a flowchart showing processing by an information processing apparatus according to an embodiment 7 of the present technology.
[Fig. 22] Fig. 22 shows an example of a screen according to the embodiment 7.
[Fig. 23] Fig. 23 is a flowchart showing processing by an information processing apparatus according to an embodiment 8 of the present technology.
[Fig. 24] Fig. 24 is a flowchart showing processing by an information processing apparatus according to an embodiment 9 of the present technology.
[Fig. 25] Fig. 25 shows an example of a screen according to the embodiment 9.

### Mode(s) for Carrying Out the Invention

Hereinafter, referring to the drawings, embodiments of the present technology will be described.

### [Configuration of Information Processing Apparatus]

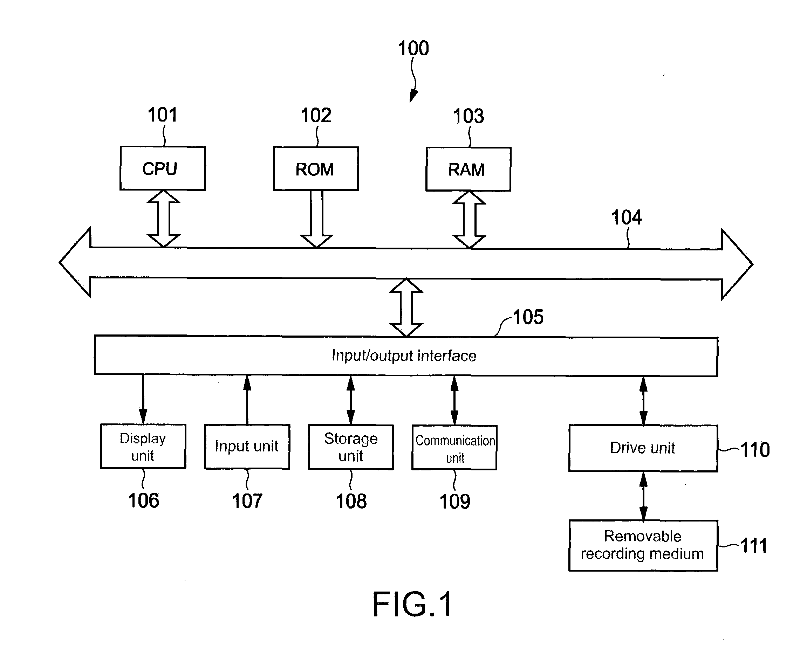

Fig. 1 is a block diagram showing, for example, a configuration of hardware of a personal computer (PC) as an information processing apparatus including a mark information recording apparatus and a mark information presenting apparatus according to an embodiment of the present technology.

The PC 100 includes a central processing unit (CPU) 101, a read only memory (ROM) 102, a random access memory (RAM) 103, an input/output interface 105, and a bus 104 that connects them to each other.

To the input/output interface 105, connected are a display unit 106, an input unit 107, a storage unit 108, a communication unit 109, a drive unit 110, and the like.

The display unit 106 is a display device using, for example, liquid crystal or electro-luminescence (EL).

The input unit 107 is, for example, a pointing device, a keyboard, a touch panel, a microphone, or another operation apparatus. If the input unit 107 includes a touch panel, the touch panel can be integral with the display unit 106.

The storage unit 108 is a non-versatile storage device, for example, a hard disk drive (HDD), a flash memory, or another solid-state memory.

The drive unit 110 is a device capable of driving a removable recording medium 111, for example, an optical recording medium, a magnetic recording tape, or a flash memory. In contrast, the storage unit 108 is often used as a device that drives, particularly, a non-removable recording medium, the device being installed into the PC 100 in advance.

The communication unit 109 is a modem, a router, another communication apparatus that is connectable to a local area network (LAN), a wide area network (WAN), or the like, the other communication apparatus serving to communicate with a different device. The communication unit 109 may perform either one of a wired communication or a wireless communication. The communication unit 109 is used separately from the PC 100 in some cases.

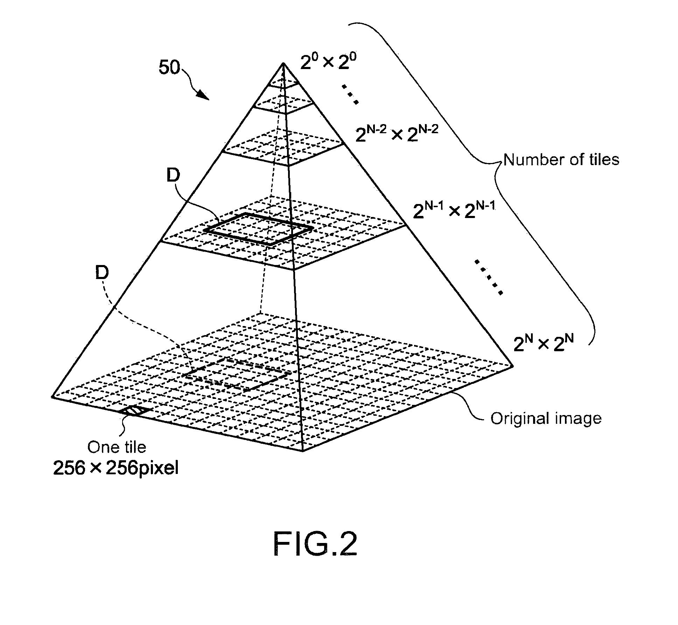

Next, an image, which is obtained by an optical microscope (not shown) and stored in, particularly, the storage unit 108 of the PC 100, and a display principle thereof will be described. Fig. 2 is a view showing an image pyramid structure for explaining the display principle.

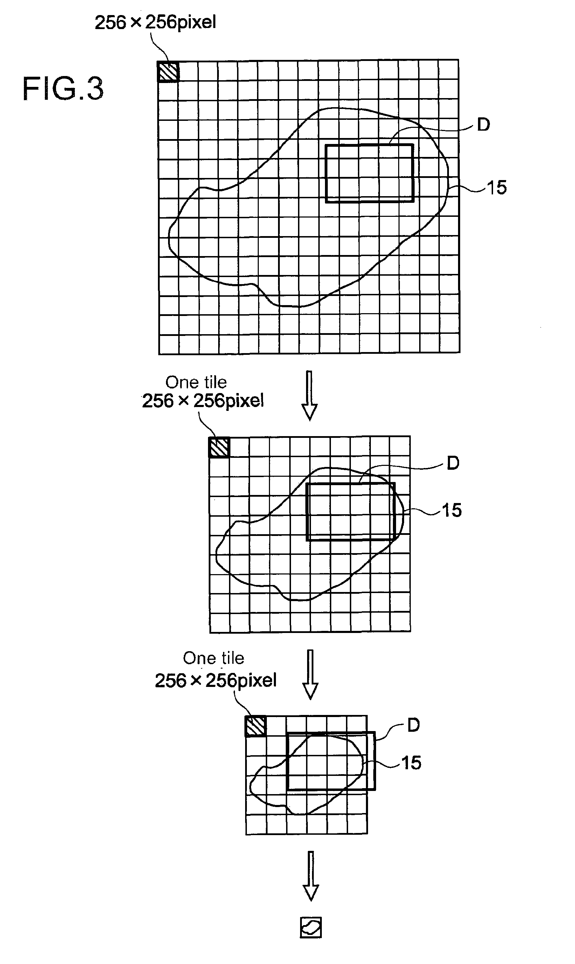

An image pyramid structure 50 according to this embodiment is an image group (entire image group) generated by a plurality of different resolutions with respect to identical images obtained from the same single observation target object 15 (see Fig. 3) by an optical microscope. On a lowermost part of the image pyramid structure 50, a largest image is disposed, and on an uppermost part thereof, a smallest image is disposed. A resolution of the largest image is 50x50 (Kpixel) or 30x40 (Kpixel), for example. A resolution of the smallest image is 256x256 (pixel) or 256x512 (pixel), for example.

That is, when the same display unit 106 displays each of those images at, for example, 100% (displays each of those images with same physical dot number as pixel number of image), the largest image is displayed in the largest size and the smallest image is displayed in the smallest size. Here, in Fig. 2, a display range of the display unit 106 is shown by D. An image of an area shown by the display range D becomes the output target image to the display unit 106.

Fig. 3 is a view for explaining a procedure of generating the image group of the image pyramid structure 50.

First, a digital image of an original image obtained at a predetermined observation magnification by an optical microscope (not shown) is prepared. The original image corresponds to the largest image that is the lowermost image of the image pyramid structure 50 shown in Fig. 2, that is, the image at a highest resolution. Therefore, as the lowermost image of the image pyramid structure 50, an image obtained by the observation at a relatively high magnification by the optical microscope is used.

Note that in the field of pathology, generally, a matter obtained by slicing an organ, a tissue, or a cell of a living body, or a part thereof is an observation target object 15. Then, a scanner apparatus (not shown) having a function of the optical microscope reads the observation target object 15 stored on a glass slide, to obtain a digital image and store the obtained digital image into the scanner apparatus or another storage apparatus.

As shown in Fig. 3, the scanner apparatus or a general-purpose computer (not shown) generates, from the largest image obtained as described above, a plurality of images whose resolutions are reduced stepwise, and stores those images in unit of "tile" that is a unit of a predetermined size, for example. The size of one tile is 256x256 (pixel), for example. The image group generated as described above forms the image pyramid structure 50, and the storage unit 108 of the PC 100 stores the image pyramid structure 50. Actually, the PC 100 only has to store the images whose resolutions are different with the images being associated with resolution information items, respectively. In addition, the generating and storing of the image pyramid structure 50 may be performed by the PC 100 shown in Fig. 1.

Out of the entire image group forming the image pyramid structure 50, the entire image other than the largest original image may be generated by a well-known compression method based on the original image or by a well-known compression method used when, for example, a thumbnail image is generated.

The PC 100 uses software that employs the system of the image pyramid structure 50 to extract a desired image from the image pyramid structure 50 in accordance with an information item of an input operation by a user through the input unit 107, and outputs the desired image to the display unit 106. Specifically, the PC 100 displays, out of an image at an arbitrary resolution selected by the user, an image of an arbitrary site specified by the user.

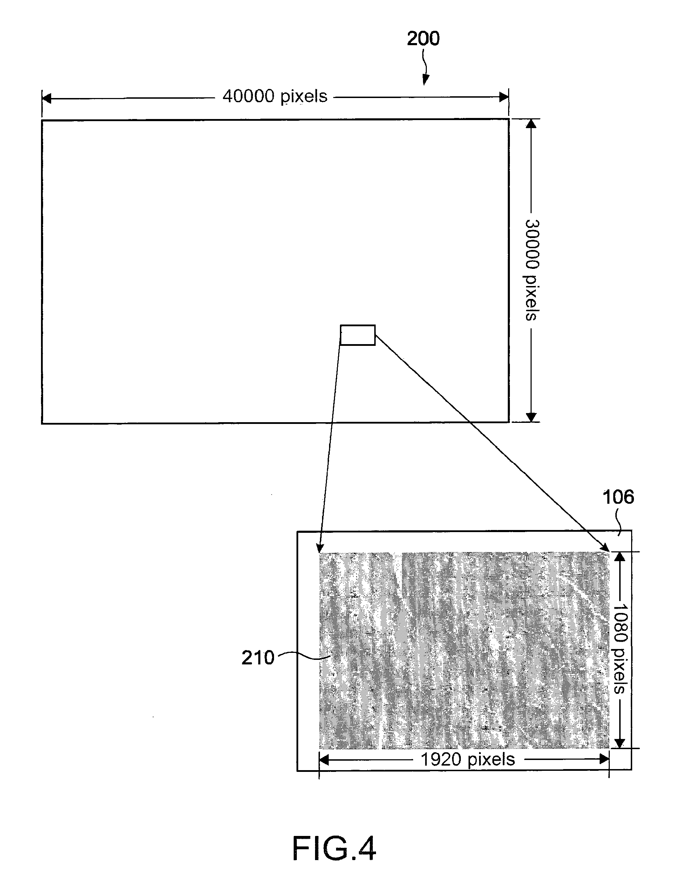

For example, as shown in Fig. 4, an image 210 that is a partial image of an entire image 200 having an arbitrary resolution out of the entire images at the plurality of different resolutions is specified according to an input operation by the user. The PC 100 includes the entire images 200 at the plurality of different resolutions as described above. When the input operation by the user specifies the image 210, the PC 100 is capable of outputting an image of the specified area to the display unit 106 as an output target image 210.

Fig. 4 shows an example in which the output target image 210 is generated from the largest original image. The display unit 106 displays the generated output target image 210 by, for example, high definition (HD) in an entire screen of the display unit 106. The display unit 106 is also capable of displaying the output target image in a part of the screen.

The display unit 106 is capable of displaying the output target image 210 having an arbitrary resolution, and the resolution of the output target image 210 depends on the resolution of the entire image that is the original image.

Such processing enables the user to feel as if the user were observing the observation target object 15 while changing the observation magnification. Thus, the PC 100 functions as a virtual microscope. Here, a virtual observation magnification corresponds to the resolution in reality.

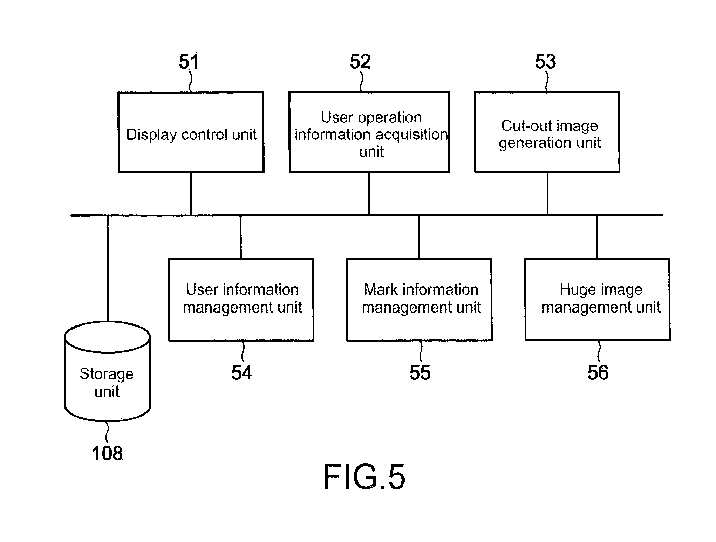

Fig. 5 is a block diagram showing a system configuration of the information processing apparatus. This system includes a display control unit 51, a user operation information acquisition unit 52, a cut-out image generation unit 53, a user information management unit 54, a mark information management unit 55, a huge image management unit 56, and the storage unit 108.

The display control unit 51 generates the above-mentioned output target image and an image for another screen display, and functions as an output unit. Hardware serving as the display control unit 51 is particularly at least either one of the CPU 101 and the input/output interface 105.

The user operation information acquisition unit 52 particularly has a function of obtaining an information item of the input operation by the user via the input unit 107 in order for the user to view the output target image and extract the cut-out image from the output target image as will be described later, and functions as an acquisition unit. Hardware serving as the user operation information acquisition unit 52 is particularly at least one of the CPU 101, the input/output interface 105, and the input unit 107.

The cut-out image generation unit 53 particularly has a function of generating the above-mentioned cut-out image based on a predetermined condition to be described later, and functions as a generator. Hardware serving as the cut-out image generation unit 53 is particularly the CPU 101.

The user information management unit 54 manages an ID for each user. The user information management unit 54 may manage a password associated with an ID for each user. Hardware serving as the user information management unit 54 is particularly the CPU 101 and the storage unit 108.

The mark information management unit 55 particularly has a function of managing a mark information item being an additional information item added to an entire image by the user, and storing, as will be described later, the mark information item while the mark information item being associated with an information item of a position (coordinate information item) in the entire image and an information item of a resolution (magnification) thereof. Further, the mark information management unit 55 provides information necessary for generating the cut-out image to the cut-out image generation unit 53 in conjunction with the above-mentioned cut-out image generation unit 53. Hardware serving as the mark information management unit 55 is particularly the CPU 101 and the storage unit 108.

The mark information item is at least one of a symbol, a code, an index, an annotation information item, and images that express them. Hereinafter, the images that express the symbol, the code, the index, and the annotation information item will be referred to as mark images.

The annotation information item is an information item formed of a text, an audio, an image, a link (e.g., uniform resource locator: URL), or the like and may be associated with the symbol, the code, the index, or the like.

The huge image management unit 56 particularly stores the above-mentioned entire image group, reads out the entire image at an arbitrary resolution out of these entire images from the storage unit 108, and performs other processing relating to the management of the entire image. Hardware serving as the huge image management unit 56 is particularly the CPU 101 and the storage unit 108.

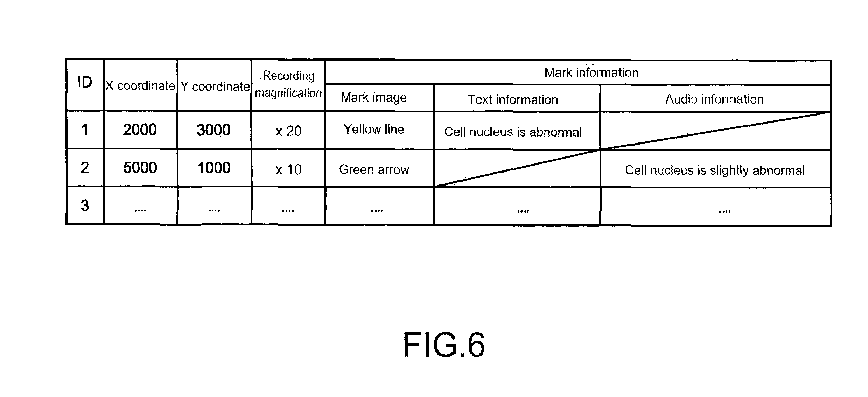

Fig. 6 is a view showing a management table of mark information items managed by the mark information management unit 55. In this example, the mark information item includes the mark image and the annotation information item. The annotation information item includes a text information item and an audio information item. For example, a mark information item of ID=1 includes a mark image and a text information item and does not include an audio information item. The mark information item is associated with an arbitrary position information item in the entire image at an arbitrary resolution, that is, a coordinate information item and a magnification. They are stored in the storage unit 108 as recording coordinate information items (recording position information items) and recording magnification information items (recording resolution information items).

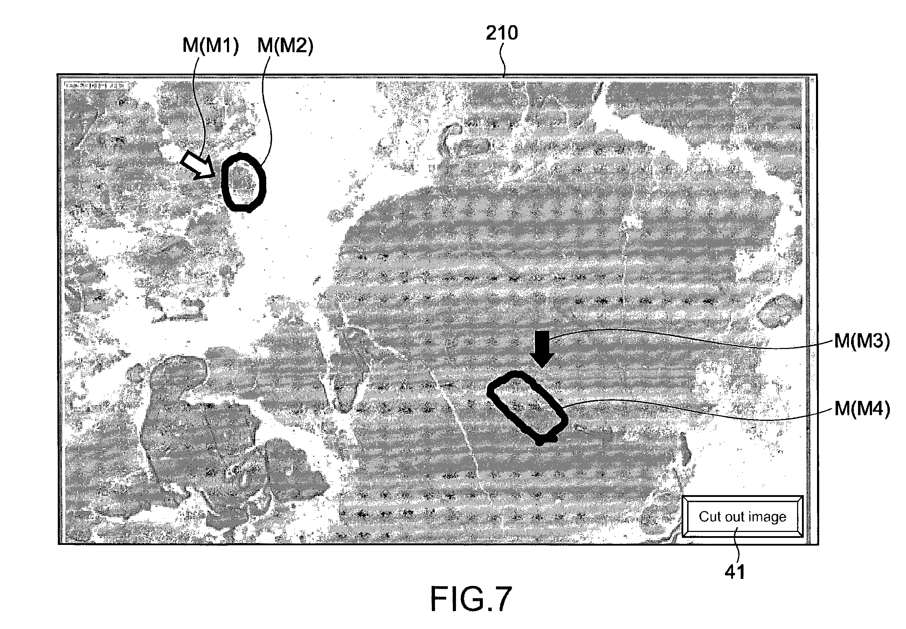

Fig. 7 is a view showing an example of the output target image with which mark images M (M1 to M4) that are mark information items associated with arbitrary positions in the entire image are combined. In this example, four mark images M are combined with the single output target image 210. The mark images M are formed by circular surrounding lines (e.g., colored lines) or colored arrows. The presence of abnormal tissues in the circular lines or positions shown at the tips of the arrows is added by the user as the mark information items using the mark images.

The mark images M may be any type of images. For example, the mark images M are formed by the surrounding lines and arrows as shown in Fig. 7, points, circles, polygons, or combinations thereof and the mark images M can be selected by the user. The color of the mark images M can be selected by the user.

Upon recording of the mark information item, the user uses application software of the information processing apparatus to add a circular line out of the mark images M by an handwriting input or the like while viewing this output target image. The arrow may be automatically added by the application software or may be manually added by the user. In addition, if the user generates the text information item as the annotation information item, for example, the user creates the text information item via the input unit 107. In this case, the mark information management unit 55 stores the mark image M, a coordinate information item in an appropriate position in which the mark image M is combined, the text information item in an associated state, and creates the management table shown in Fig. 6.

The coordinate information item of the position in which the mark image M is combined means a coordinate of a center of an outline of the circular line, for example. However, any portion, for example, the uppermost portion or leftmost portion of the mark image M in the screen may be used. Alternatively, if the mark image M is the arrow as shown in Fig. 7, a coordinate recorded in the management table is set as a position of the tip of the arrow or a position distant from the tip by a predetermined distance, for example.

If the user does not add the mark image M, the coordinate recorded in the management table may be any coordinate, for example, a center coordinate or the uppermost or leftmost coordinate of the output target image 210 output when the mark information item is recorded.

Regarding the size of the mark image M itself, the mark image M is displayed in a predetermined size irrespective of the resolution of the entire image. The size of the mark information item may be set to a certain value in advance or may be customizable by the user.

For example, by the user moving a pointer displayed on a screen and moved through a mouse to a recorded coordinate position or a position near the position or clicking the coordinate position or a position near the position, the information processing apparatus displays a text information item thereof on the screen. If the annotation information item is the audio information item, the information processing apparatus reproduces an audio information item thereof according to the above-mentioned predetermined operation by the user. The annotation information item recorded in the management table shown in Fig. 6 may be a URL showing a location of a file configuring the annotation information item.

In this manner, visualizing the information item expressing (presence of) the mark information item as the mark image M enables the user to access the mark information item based on the mark image M while viewing the output target image.

### [Processing Contents of Information Processing Apparatus]

Processing of the PC 100 to be described below is realized by the cooperation of software stored in the storage unit 108, the ROM 102, or the like and a hardware resource of the PC 100. Specifically, the following processing is realized by the CPU 101 loading a program configuring software stored in the storage unit 108, the ROM 102, or the like into the RAM 103 and executing the program. For the sake of description, the processing will be described assuming that the subject of the processing is the CPU 101.

### (Embodiment 1)

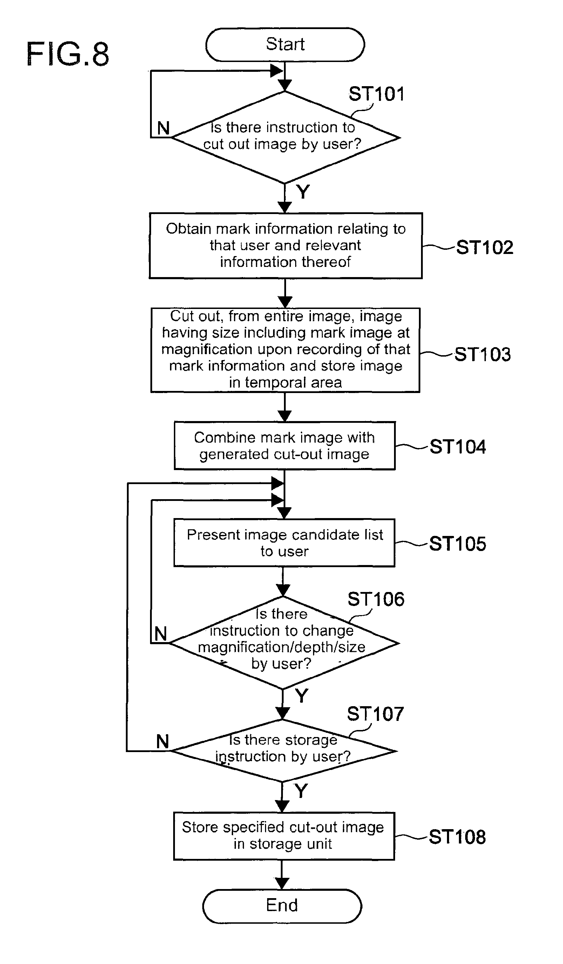

Fig. 8 is a flowchart showing processing by an information processing apparatus according to an embodiment 1 of the present technology.

As shown in Fig. 7, the CPU 101 outputs the output target image 210. Specifically, if an output coordinate group (output position group) constituting the output target image 210 output includes a recording coordinate associated with the mark information item added by the user, the CPU 101 combines the mark image M and outputs the output target image 210. If the output target image 210 includes a plurality of mark information items added by the user, a plurality of mark images M thereof are combined and output (see Fig. 7).

Note that, the user information management unit 54 can be identified by the user. For example, upon activation of (application software according to present technology of) the information processing apparatus or during use thereof, the user information management unit 54 is capable of identifying the user by processing for causing the user to log in with an ID or a password.

As shown in Fig. 7, at the lower right of the screen including the output target image 210, a graphical user interface (GUI) button of "cut out image." If there is an instruction to cut out an image by the user (Yes in Step 101), for example, pressing the button by the user, the CPU 101 obtains an information item of the input operation of the cut-out specification, and obtains a mark information item relating to the user and a relevant information item thereof (Step 102). The relevant information item is an information item of at least a recording coordinate and a recording magnification that are associated with the mark information item.

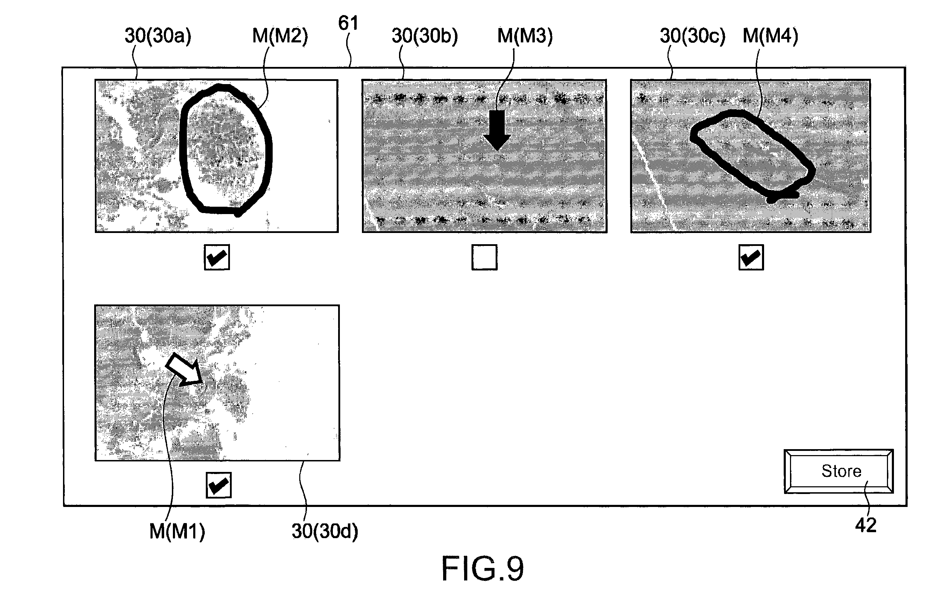

The CPU 101 cuts out, from the entire image, an image having a size including the mark image M at an observation magnification (hereinafter, simply referred to as magnification) upon recording of the mark information item and stores the image in a temporal storage area of the RAM (Step 103). Further, the CPU 101 combines, with such cut-out images, the mark images M corresponding to the recording coordinates (Step 104). Then, as shown in Fig. 9, the CPU 101 generates a candidate screen 61 for causing the user to select a target of the cut-out images 30 (30a to 30d), which is to be stored in the storage unit 108, and outputs this (Step 105). At this time, the CPU 101 functions as the candidate screen generator.

The magnification of the generated cut-out images 30 is a magnification of the entire image output upon recording of each mark information item, that is, a recording magnification recorded in the management table. Therefore, the size of those cut-out images 30 is different (or may be the same, of course). However, in the candidate screen 61 shown in Fig. 9, the CPU 101 displays those images as if the images had the same size, that is, displays the cut-out images 30 as thumbnail images.

If an image having a size including the mark image M is formed, the cut-out image 30 only needs to be formed such that the center of gravity of the mark image M is located at a center coordinate of the cut-out image 30, for example. That is, the center coordinate of the cut-out image 30 becomes a recording coordinate associated with the mark information item. Alternatively, with a coordinate different from the coordinate of the center of gravity of the mark image M being a reference, the cut-out image 30 may be formed.

The size including the mark image M only needs to be a size such that a vertical or horizontal size of the cut-out image 30 is, for example, approximately 1.2 to 2 times larger than a vertical or horizontal size of an outline of the mark image M. Alternatively, the vertical or horizontal size of the cut-out image 30 may be the same as the vertical or horizontal size of the outline of the mark image M.

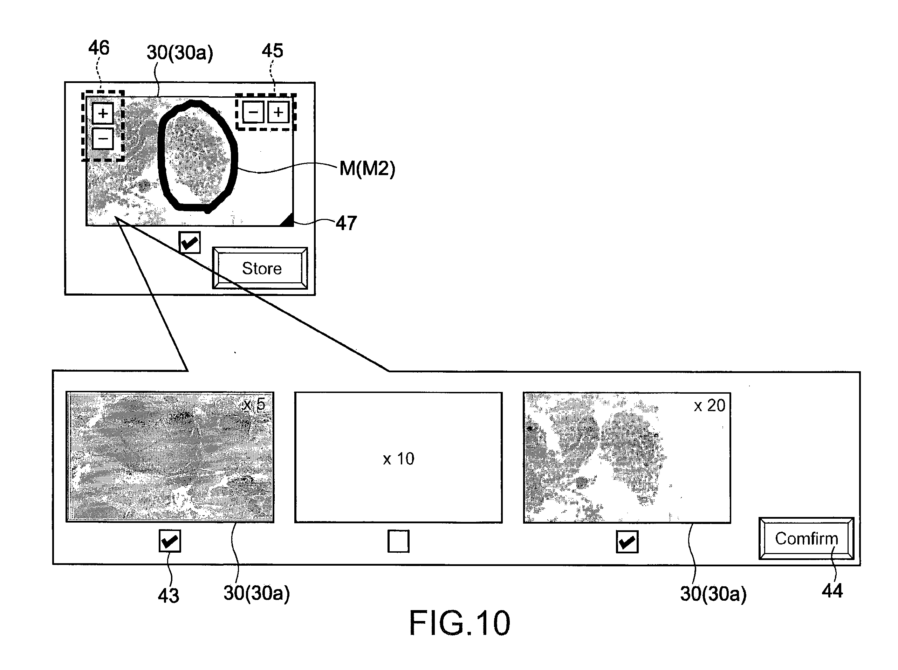

The CPU 101 waits for an instruction to change a magnification, a depth, or a size of those cut-out images 30 by the user (Step 106). For example, as shown in the upper left picture of Fig. 10, the user is able to set changes of the magnification, the depth, and the size via adjustment portions 45, 46, and 47 of GUIs of the magnification, the depth, and the size, which are combined in predetermined portions of the cut-out image 30. Note that, the "depth" will be described later.

In the example shown in Fig. 10, the user has selected the magnifications of 5x and 20x by a check box 43. As shown in the lower portion of Fig. 10, a screen in which the candidates of the cut-out image 30 are arranged having coordinates (e.g., center coordinates) the same as the recording coordinates of the upper left cut-out image 30 in the entire images taken at magnifications of 5x and 20x is generated. When the user depresses a confirmation button 44 (Yes in Step 107), the CPU 101 stores the cut-out images 30 taken at magnifications of 5x and 20x in the storage unit 108 while the cut-out images 30 being associated with the corresponding mark information items (Step 108).

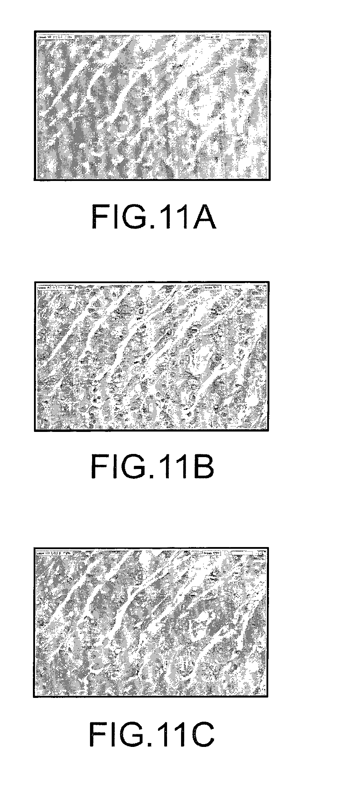

The above-mentioned "depth" will be described. Figs. 11A to 11C are diagrams showing images different in depth. The images different in depth mean images having focus differences of the objective lens of the microscope. Those images are entire images that are taken at the same magnifications and different in focus position.

The target object to be a target of the original image that has been observed by the real microscope is contained in a prepared slide and has a predetermined small thickness. Upon observation by the real microscope, a plurality of entire images captured and formed changing the focus position at a predetermined number of times are stacked by the amount corresponding to that thickness in a thickness direction thereof. In this embodiment, this technique is referred to as Z-stack. The number of entire images stacked by the Z-stack is, for example, 5 to 20. However, it is needless to say that the number of entire images is not limited to this range.

In this manner, the storage unit 108 may store a plurality of images by the Z-stack for each group of entire images taken at the same magnification. Such a Z-stack technique enables the user to use the information processing apparatus to feel as if the user observed a target object (image) while focusing on a predetermined depth position of the real target object having a predetermined thickness. Thus, the present technology is useful in the case where different tissues are present in different depth positions. In the example shown in Fig. 10, the user is able to specify an entire image corresponding to one depth position out of the entire images stored in a plurality of depth positions via the adjustment portion 46.

As described above, in this embodiment, the partial image of the output target image 210, which includes the coordinate information item associated with the mark information item in the entire image is cut out and the cut-out image 30 is generated. Therefore, the user is able to view the cut-out image 30 associated with the mark information item, which is convenient.

In this embodiment, in accordance with at least one condition of the magnification, the depth, and the size specified by the user, the cut-out image 30 is generated. Thus, it is possible to generate an image easy for the user to view.

### (Embodiment 2)

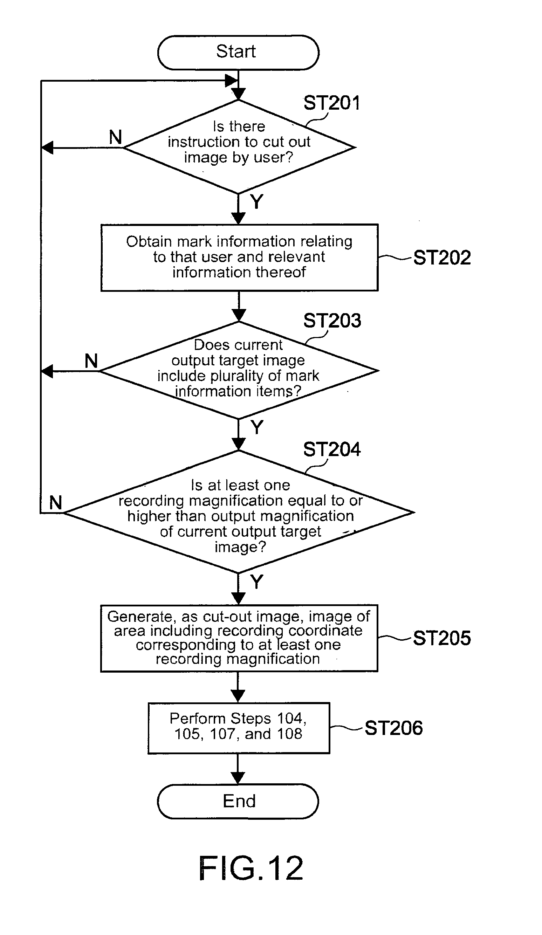

Fig. 12 is a flowchart showing processing by an information processing apparatus according to an embodiment 2 of the present technology. Hereinafter, the description of the same processing as the processing according to the above embodiment 1 will be simplified or omitted and different points will be mainly described.

The processing according to the embodiment 2 is processing performed in the case where the output coordinate group constituting the output target image 210 to be output includes a plurality of recording coordinates associated with a plurality of mark information items. Although, also in the above embodiment 1, the output coordinate group constituting the output target image 210 includes the plurality of recording coordinates, the cut-out image is, in the processing of the embodiment 1, generated for each of the mark information items (recording positions) or for each of the recording magnifications.

The CPU 101 determines whether or not the output coordinate group constituting the current output target image 210 includes the plurality of recording coordinates associated with the plurality of mark information items (Step 203).

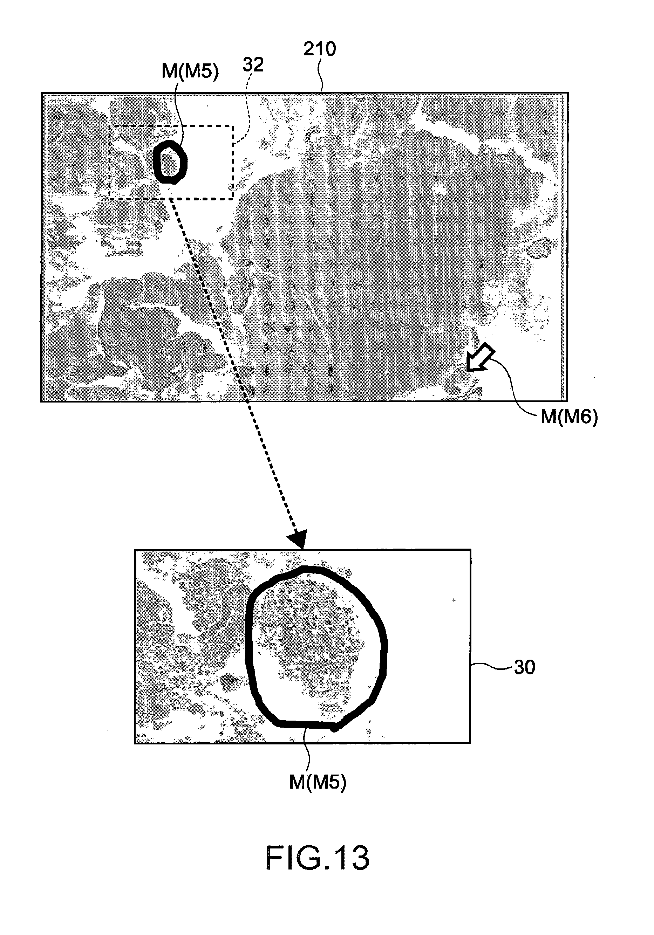

In the case of Yes in Step 203, the CPU 101 determines whether or not at least one recording magnification of the plurality of recording magnifications corresponding to a plurality of recording coordinates is equal to or higher than the output magnification of the current output target image 210 (Step 204). In the example shown in Fig. 13, it is assumed that the recording magnification corresponding to the mark image M5 out of recording magnifications corresponding to two mark images M5 and M6 is equal to or higher than the output magnification of the current output target image 210.

In the case of Yes in Step 204, as shown in Fig. 13, the CPU 101 generates an image of an area 32 including the recording coordinate corresponding to the at least one recording magnification as the cut-out image 30 (Step 205). In other words, for each of the plurality of recording coordinates, the cut-out area 32 is cut out from the output target image. In the example shown in Fig. 13, the cut-out image 30 corresponding to the mark image M5, which is appropriate to the magnification of the current output target image 210, is generated. On the other hand, the mark image M6 that has a recording magnification lower than the magnification of the current output target image 210 and is represented by the arrow is ignored. After that, the CPU 101 performs the same processing as that of Steps 104, 105, 107, and 108 in the stated order.

According to this embodiment, the user is able to obtain the cut-out image 30 having a recording magnification, which is appropriate to the resolution of the current output target image 210.

### (Embodiment 3)

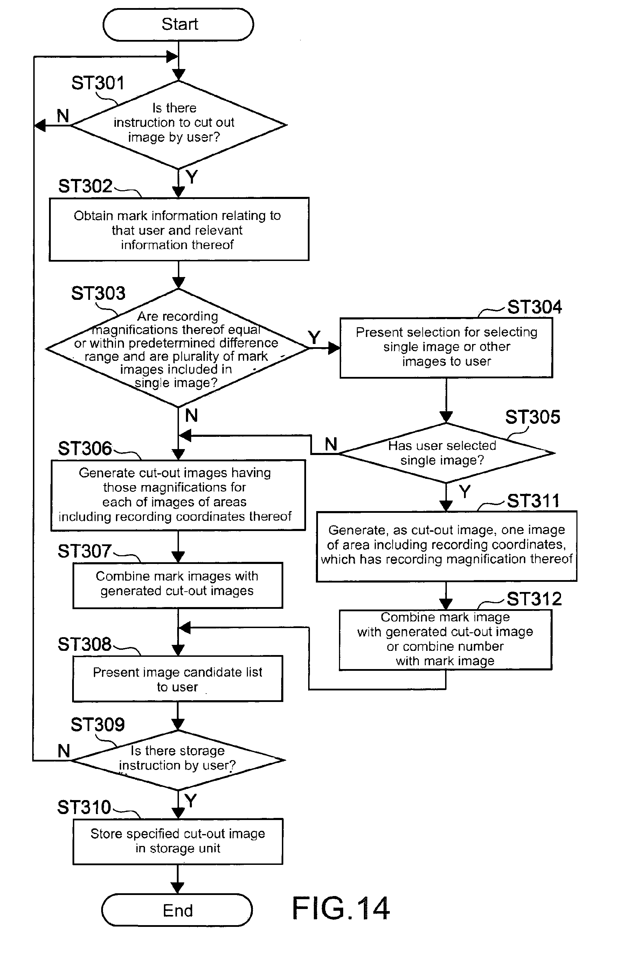

Fig. 14 is a flowchart showing processing by an information processing apparatus according to an embodiment 3 of the present technology.

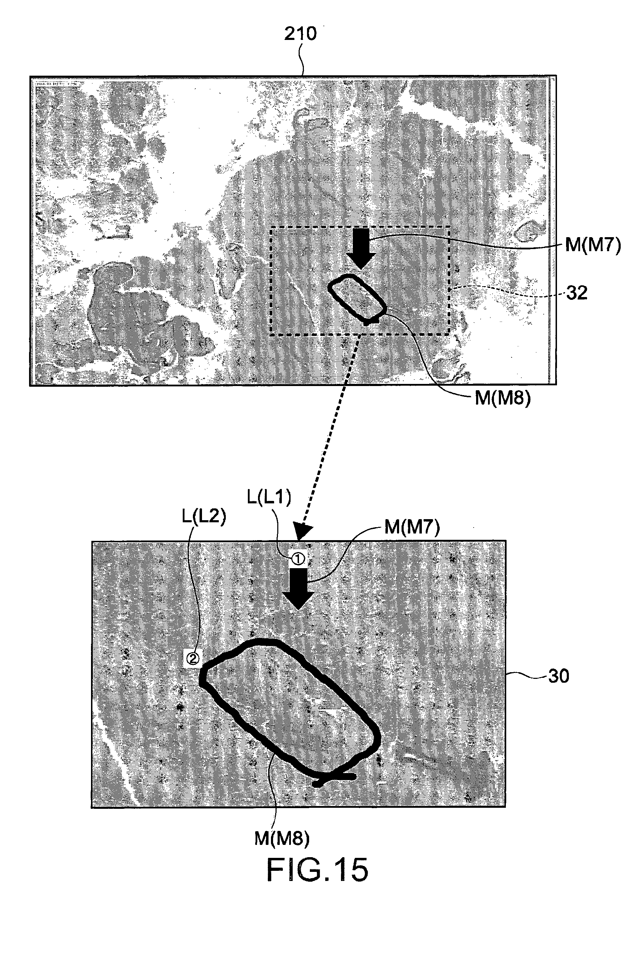

As shown in an upper picture of Fig. 15, the CPU 101 determines whether or not the single cut-out area 32 can include a plurality of mark images M (M7 and M8) (Step 303). Specifically, the CPU 101 determines whether or not recording magnifications corresponding to those mark images M are equal or within a predetermined difference range and whether or not an image having a set cut-out size includes a plurality of recording coordinates (here, plurality of mark images M).

For the "predetermined difference" of the "predetermined difference range," a default value, for example, 5, 10, or 15 only needs to be appropriately set and the "predetermined difference" may be customizable by the user. Also for the set cut-out size, a default size may be set or the set cut-out size may be customizable by the user.

In the case of Yes in Step 303, the CPU 101 performs an inquiry for causing the user to select generation of the single cut-out image 30 or generation of the cut-out images 30 for each of the mark images M (e.g., presents inquiry screen (not shown)) (Step 304).

If the user has selected the generation of the cut-out images 30 for each of the mark images M (No in Step 305), the CPU 101 generates, in accordance with the recording coordinate and the recording magnification associated with each of the mark images M, the cut-out image 30 having the magnification for each of images of areas including the recording coordinates (Step 306). In this figure, the example of the screen relating to the processing is not shown. After that, the CPU 101 performs the same processing as that of Steps 104, 105, 107, and 108 shown in Fig. 8 in the stated order (Steps 307 to 310).

Note that, in Step 306, there can be a case where at least two recording magnifications of the recording magnifications are equal or within a predetermined difference range. It should be noted that, in this case, the plurality of recording coordinates cannot be included in one cut-out size.

On the other hand, in the case of Yes in Step 305, the CPU 101 generates one image of the area 32 including the recording coordinates, which has that recording magnification, as the cut-out image 30 (Step 311). Here, if recording magnifications thereof are not equal (within range having predetermined difference), the CPU 101 only needs to calculate an average value, a middle value, or a minimum value of the recording magnifications, a value closest to them, or the like, and generate one image of the area 32 including the recording coordinates, which has the recording magnification obtained by the calculation, as the cut-out image 30. The arithmetic algorithms of the magnification of the cut-out image 30 may be selectable by the user.

In Step 311, the cut-out image 30 only needs to be generated, for example, such that the center of gravity of the plurality of recording coordinates corresponds to the center position of the cut-out image 30. With this, it is possible to generate the cut-out image 30 including the recording coordinates of the plurality of the mark images M arranged in good balance. Alternatively, the cut-out image 30 may be formed such that a position other than such a center of gravity corresponds to a predetermined position within the cut-out image 30.

After Step 311, as shown in a lower picture of Fig. 15, the CPU 101 combines mark images M (M7 and M8) with the generated cut-out image 30 and combines, with the mark images M, images (e.g., numbers) L (L1 and L2) for identifying them (Step 312). A setting that the identification images L of the mark images M are not added may be provided. After that, the CPU 101 performs the processing of Steps 308 to 310.

As a rule of adding the identification images L of the mark images M, there are, for example, adding the identification images L in order from the upper left to the lower right like a raster scan, and a recording time order of the mark information items by the user (time stamp). In order to realize the later, it is necessary to also record time stamps of the mark information item in the management table of the mark information items.

As another embodiment of the processing of this embodiment 3, for example, the following processing is also possible. For example, instead of Step 303, the recording magnification is not set as the target of the determination processing, and thus, whether or not the plurality of mark images M are included in the area 32 having the set cut-out size may be determined. In this case, in Step 311, they have different recording magnifications. Thus, in this case, instead of Step 311, for example, the CPU 101 only needs to calculate a minimum value of the recording magnifications thereof and generate a single cut-out image 30 having this minimum recording magnification.

### (Embodiment 4)

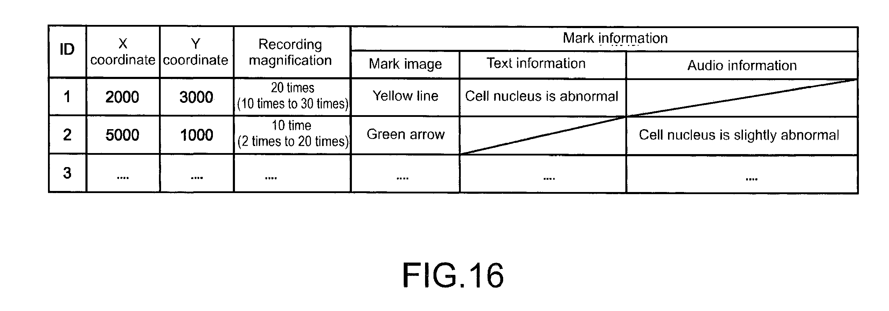

Fig. 16 shows a management table of mark information items according to an embodiment 4 of the present technology.

In this embodiment 4, even if the recording magnification upon recording of the mark information item is, for example, X times, a magnification range constituted of at least two or more magnifications including an X-value (recording magnification range (recording resolution range)) is set.

In the case where such a management table is created, for example, the CPU 101 only needs to determine whether or not the output magnification of the current output target image 210 is within the above-mentioned recording magnification range instead of Step 204 shown in Fig. 12. In the case of Yes in the determination processing, the CPU 101 only needs to proceed to Step 205.

### (Embodiment 5)

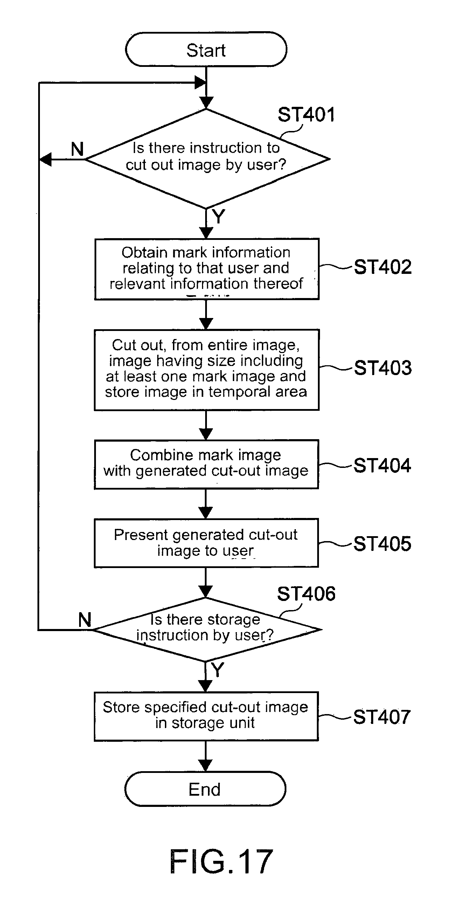

Fig. 17 is a flowchart showing processing by an information processing apparatus according to an embodiment 5 of the present technology.

If the output coordinate group constituting the output target image 210 includes recording coordinates of a plurality of mark information items (mark images M9 and M10), the CPU 101 generates an image of the area 32 having a size including at least one mark image M of the mark images M, as the cut-out image 30 (Step 403).

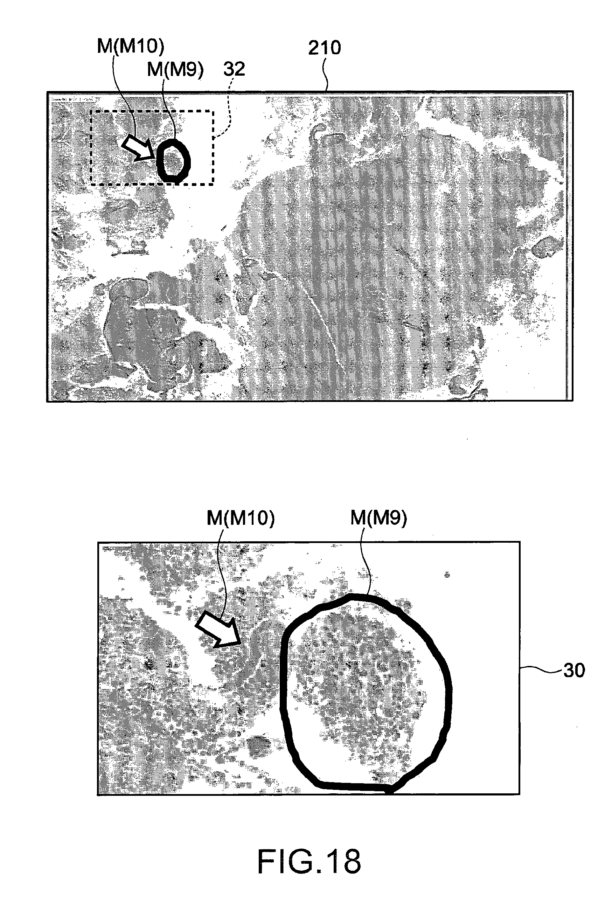

For example, in the example shown in Fig. 18, in the case where the two mark images M9 and M10 are present close to each other, the area 32 having a size including both the mark images M is selected by the user via the input unit 107 and cut out.

Value or the like. The arithmetic algorithm of the magnification of the cut-out images 30 can be selected by the user.

According to this embodiment, the user is able to arbitrarily specify the area 32 for cutting out, and generate the cut-out image 30.

In Step 403, the magnification of the cut-out image 30 may be an output magnification of the output target image 210 currently output. Alternatively, the CPU 101 may select an optimal magnification and generate the cut-out image 30. The optimal magnification may be an average value, a middle value, or a minimum value of magnifications corresponding to the plurality of mark information items, or a value closest to them.

### (Embodiment 6)

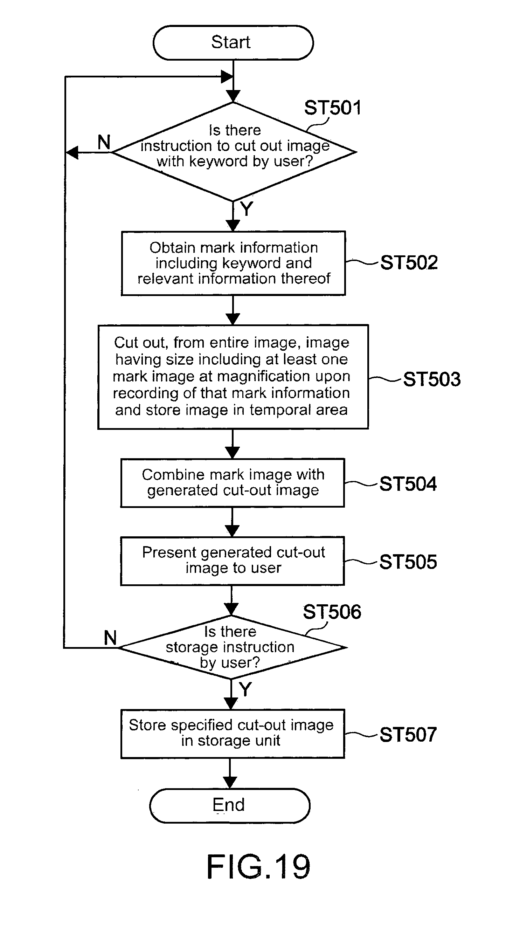

Fig. 19 is a flowchart showing processing by an information processing apparatus according to an embodiment 6 of the present technology. This embodiment is applied in the case where the mark information item includes the text information item.

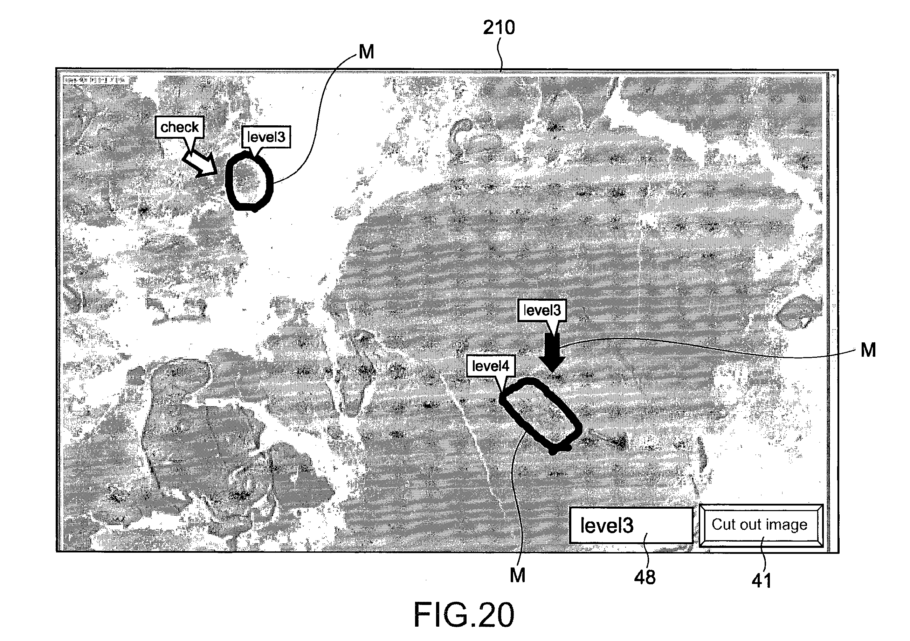

The CPU 101 determines whether or not there is an instruction to cut out an image with a keyword (specification keyword) input by the user (Step 501). Fig. 20 shows an example of a screen including an input box 48 in which a keyword is input by the user. In the case of Yes in Step 501, the CPU 101 obtains a mark information item including that keyword and a relevant information item thereof (Step 502). In the example shown in Fig. 20, mark information items (mark images M) including "check", "level 3," and the like as keywords are displayed.

The CPU 101 generates an image having a size including the mark images M at a magnification upon recording of the mark information item including that keyword, which includes at least one recording coordinate, as the cut-out image 30 (Step 503). If a plurality of mark information items including that keyword are present within the output target image 210, the cut-out image 30 is generated for each of those mark information items.

With this, the user is able to select a desired mark information item from the plurality of mark information items with a keyword.

### (Embodiment 7)

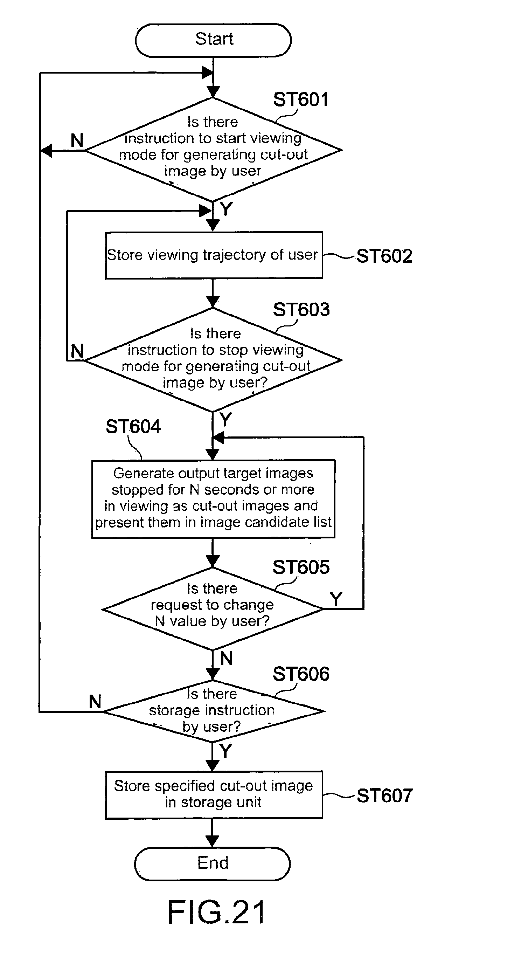

Fig. 21 is a flowchart showing processing by an information processing apparatus according to an embodiment 7 of the present technology. In this embodiment, the cut-out image generation unit 53 includes a viewing mode (image cut-out viewing mode) of the entire image for generating the cut-out image. In this mode, when the user views the entire image while panning, the cut-out image is automatically generated based on an information item of an operation state input by the user via the input unit 107.

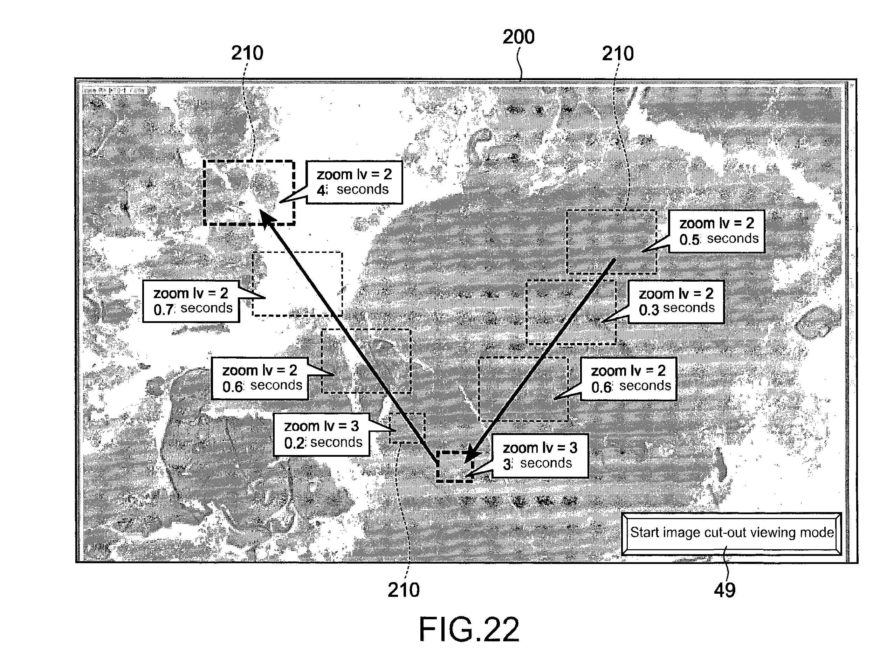

For example, as shown by the arrow of Fig. 22, the user pans in the entire image 200 via the input unit 107, for example, from the upper right to the lower left or from the lower left to the upper right in the entire image 200. That is, Fig. 22 shows a trajectory of the output target image 210 (shown by rectangular dashed lines) in the entire image 200, which is output by a continuous or discontinuous sequence of specification operations by the user. An output target image group on the trajectory is constituted of a plurality of images different from each other in at least either one of output coordinate and output magnification.

Note that, in this embodiment, for the sake of description, an image shown in Fig. 22 is displayed as the whole of the entire image 200, and Fig. 22 expresses the trajectory of the output target image 210 in the entire image 200, which is to be output by the display control unit 51 as a screen. In contrast, in Fig. 7, 13, 15, or the like, the upper picture thereof is the output target image 210. Therefore, in Fig. 22, balloons of "zoom lv=2, 0.5 seconds" and the like are for the description of the embodiment and not displayed on the screen in reality.

Although a mode start button 49 is provided at the lower right of the screen (or stop button displayed by toggle operation may be provided), this start button 49 (or stop button) is not necessarily needed.

If there is an instruction to start the mode by the user (Yes in Step 601), the CPU 101 stores a viewing trajectory of the user in, for example, a temporal area (Step 602). Specifically, the CPU 101 stores coordinates of the output target image 210 with stamps (date and time of creation, or the like). The coordinate of the output target image 210 only needs to be a representative coordinate of a predetermined position in the output target image 210, for example, a center coordinate or an upper left-most coordinate.

If there is an instruction to stop the mode by the user (Yes in Step 603), the CPU 101 generates an output target image 210, which is stopped at the same position for N seconds (three seconds in example of Fig. 22) or more and output, out of the output target images 210 in the viewing trajectory stored in the temporal area, as the cut-out image based on the information items of the representative coordinates corresponding thereto. Whether or not the output target image 210 is the image output for N seconds can be determined using the time stamp.

Those output target images 210 are presented to the user in an image candidate list (candidate screen) (Step 604). That is, in this embodiment, the operation state of the user means an operation of stopping the output target image 210 at the same position for N seconds or more. That operation is, for example, an operation of the user not moving a mouse or the like at the same position.

If there is a change request of the N value according to an input operation by the user (Yes in Step 605), the CPU 101 returns to Step 604.

Note that, in the above, the CPU 101 generates the output target image 210 output for N seconds or more as the cut-out image as it is. However, part of the output target image 210 output for N seconds or more may be generated as the cut-out image.

Depending on the number of seconds for each of the output target images 210 output for N seconds or more, the size of the cut-out image 30 may be changed. For example, the CPU 101 may increase (or reduce) the size of the cut-out image 30 as the number of seconds relating to the cut-out image 30 becomes larger.

### (Embodiment 8)

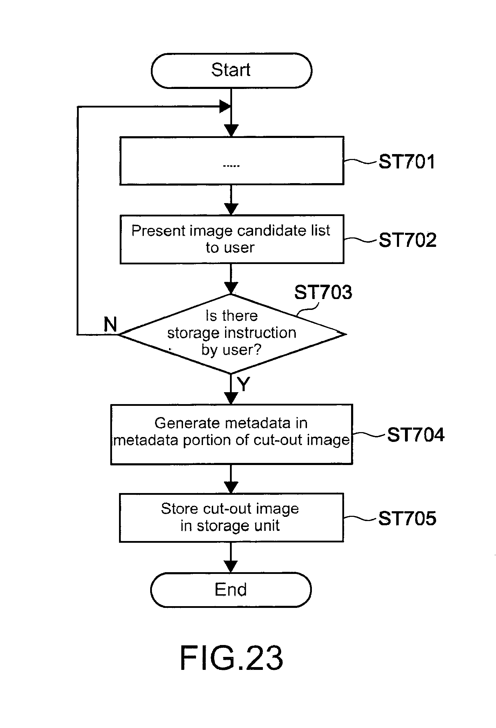

Fig. 23 is a flowchart showing processing by an information processing apparatus according to an embodiment 8 of the present technology.

The CPU 101 performs, in any one of the above embodiments 1 to 7, the generation of the cut-out images 30, presents the image candidate list to the user as described above, and waits for an instruction to store cut-out images 30 by the user (Steps 701 to 703).

The CPU 101 embeds (generates) metadata in a metadata portion of the cut-out image 30 (Step 704). In this case, the CPU 101 functions as a metadata generator. In this case, the cut-out image 30 is generated as a file such as joint photographic experts group (JPEG), tagged image file format (TIFF), graphic interchange format (GIF), and portable network graphics (PNG).

The metadata includes the coordinate and the magnification of the generated cut-out image 30, and further includes information items of a depth, an image size, and the like. Further, the metadata includes information on a system of the information processing apparatus, information of an ID (or URL) of application software for viewing the entire image, for example, or information of a URL or the like that indicates the location of the original entire image from which the cut-out image 30 is cut out.

The CPU 101 stores the cut-out image 30 including the metadata in the storage unit 108 (Step 705).

In the case where an ID or a URL of application software is generated as the metadata, it is, for example, assumed that the user performs a right click or the like with respect to the cut-out image 30 to select "start Viewer." This enables the CPU 101 to start the application software. Then, for example, the CPU 101 can output at least part of an entire image 60 with an image including an area of a coordinate included in the cut-out image 30 being a center for displaying. Further, the CPU 101 can perform the output of the cut-out image 30 in accordance with a magnification, a depth, a size, or the like included in metadata.

For example, in the case where this information processing apparatus and a different information processing apparatus are connected via a LAN or the Internet, the following processing may also be possible. When the different information processing apparatus without the application software of this information processing apparatus displays the cut-out image 30 and "starts Viewer," the different information processing apparatus only needs to virtually use the application of this information processing apparatus or to install the application.

### (Embodiment 9)

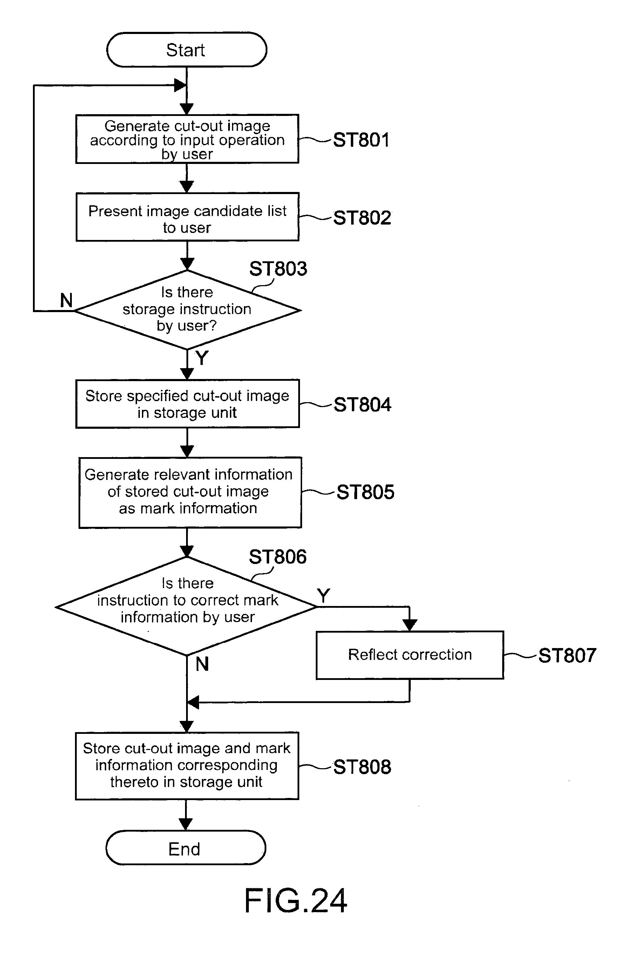

Fig. 24 is a flowchart showing processing by an information processing apparatus according to an embodiment 9 of the present technology.

The CPU 101 generates, based on, for example, an information item of an input operation by the user, at least one cut-out image 30 from the entire image (Step 801). In Steps 802 to 804, the same processing as that of Steps 105 and 107 to 108 is performed.

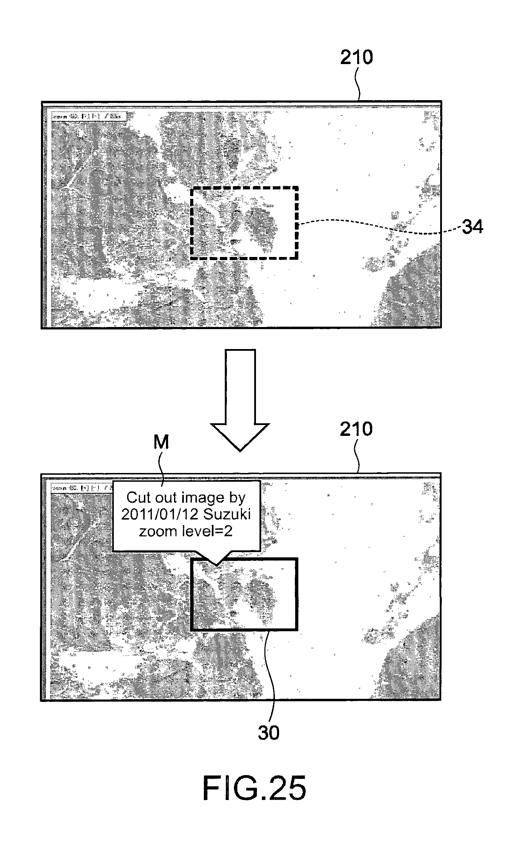

The information item of the input operation by the user, is, for example, as shown in Fig. 25, an information item of the input operation when the user uses a mouse or the like to specify at least a partial area 34 of the output target image 210.

Based on an information item of the coordinate and the magnification being a relevant information item of the generated cut-out image 30, the CPU 101 generates a mark information item (Step 805). This magnification is an output magnification of the output target image 210 output upon cutting out.

The mark information item includes, for example, a magnification, a time stamp upon cutting out, and a user information item. In the example shown in Fig. 25, those information items are combined with the output target image 210 (entire image) as the mark images M.

When the mark information item is corrected according to the input operation by the user (Yes in Step 806), the CPU 101 reflects the correction (Step 807) and stores those cut-out images 30 and mark information items corresponding thereto in the storage unit 108 (Step 808). Thus obtained cut-out images 30 and the mark information items corresponding thereto are managed by the above-mentioned mark information management unit 55.

In this embodiment, the mark information items are associated with the cut-out images 30 generated according to the input operation by the user and stored. Therefore, it is possible to realize a function for viewing the cut-out images 30 with the mark information items (mark images M) being used as indexes, a search function of the cut-out images 30 based on the mark information items, and the like, that is, convenient functions using the cut-out images 30 (for viewing cut-out images 30).

Also to the cut-out images 30 generated in the above embodiment 6, the processing according to this embodiment 8 may be applied.

### [Other Embodiments]

The present technology is not limited to the above-mentioned embodiments and various other embodiments can be realized.

In the above-mentioned embodiments, as shown in Fig. 9, when the CPU 101 obtains an information item of an input operation, for example, the user depressing a image cut-out button 41 as a GUI, the CPU 101 generates the cut-out image 30 in accordance with various conditions according to each of the above-mentioned embodiments. However, even when the CPU 101 does not obtain the information item of the input operation by the user, the CPU 101 may generate the cut-out image 30 in accordance with the various conditions according to each of the above-mentioned embodiments. That is, the processing by the cut-out image generation unit 53 also includes, in addition to the processing via the candidate screen 61 of the cut-out target images as shown in each of the above-mentioned embodiments, processing not via it. The processing not via it means processing of generating the cut-out images 30 in accordance with the various conditions according to each of the above-mentioned embodiments with the display of the output target image 210 being a trigger.

As the mark information item, instead of the mark image M or in addition to the mark image M, the audio information item may be recorded while the audio information item being associated with information items of the recording coordinate and the recording magnification. For example, the mark images M do not need to be provided. In this case, the visually impaired and the like can also use the information processing apparatus according to the present technology.

In each of the above-mentioned embodiments, the images obtained by a microscope such as a cell and a tissue are exemplified as the target object to be an observation target. However, the present technology is applicable to any target objects such as material (liquid or crystal), a machinery component, and a map.

Out of the features of each of the above-mentioned embodiments, at least two features can also be combined.

The present technology may also take the following configurations.
(1) An information processing apparatus, including:
   a storage unit that associates, with a position information item in an entire image having an arbitrary resolution out of entire images generated at a plurality of different resolutions with respect to a single target object and an information item of at least the one resolution of the entire image, a mark information item being an additional information item of a user, and stores the position information item and the information item of the resolution with which the mark information item is associated, as information items of a recording position and a recording resolution;
   an output unit that outputs at least a partial image of the entire image having the arbitrary resolution to be displayed as an output target image; and
   a generator that cuts out an image of an area in the output target image, which includes the recording position with which the mark information item is associated, from the output target image, to thereby generate a cut-out image.
(2) The information processing apparatus according to Item (1), in which
   the generator generates the cut-out image from the output target image having a resolution specified by the user.
(3) The information processing apparatus according to Item (1) or (2), in which
   the generator generates the cut-out image in a size specified by the user.
(4) The information processing apparatus according to any one of Items (1) to (3), in which
   the generator cuts out, when an output position group constituting the output target image to be output includes a plurality of recording positions with which a plurality of mark information items are associated, images of areas including information items of the plurality of recording positions from the output target image for each of the plurality of recording positions.
(5) The information processing apparatus according to Item (4), in which
   the generator cuts out images of areas including the information item of the plurality of recording positions from the output target image for each of a plurality of recording resolutions corresponding to the plurality of recording positions.
(6) The information processing apparatus according to any one of Items (1) to (3), in which
   the generator generates, when an output position group constituting the output target image to be output includes a plurality of recording positions with which a plurality of mark information items are associated and at least one recording resolution of a plurality of recording resolutions corresponding to the plurality of recording positions is equal to or larger than an output resolution being the resolution of the output target image, an image of an area including the recording position corresponding to the at least one recording resolution as the cut-out image.
(7) The information processing apparatus according to any one of Items (1) to (3), in which
   the generator generates, when an output position group constituting the output target image to be output includes a plurality of recording positions with which a plurality of mark information items are associated and an image having a set cut-out size includes the plurality of recording positions, an image of an area including the plurality of recording positions as the single cut-out image.
(8) The information processing apparatus according to Item (7), in which
   the generator generates, when a plurality of recording resolutions corresponding to the plurality of recording positions are equal or within a range of a predetermined difference, an image of an area including the plurality of recording positions as the single cut-out image.
(9) The information processing apparatus according to Item (7) or (8), in which
   the generator generates the cut-out image such that a center of gravity of the plurality of recording positions is a center of the cut-out image.
(10) The information processing apparatus according to any one of Items (1) to (3), in which
   the storage unit associates the mark information item with each resolution range constituted of at least two resolutions including an output resolution being the resolution of the output target image output by the output unit and stores an information item of the resolution range with which the mark information item is associated, as an information item of a recording resolution range.
(11) The information processing apparatus according to any one of Items (1) to (3), in which
   the generator generates, when an output position group constituting the output target image to be output includes a plurality of recording positions with which a plurality of mark information items are associated, an image of an area specified by the user, which is an image of an area including at least one recording position with which at least one the mark information item of the plurality of mark information items is associated, as the cut-out image.
(12) The information processing apparatus according to any one of Items (1) to (3), in which
   the generator generates, when an output position group constituting the output target image to be output includes a plurality of recording positions with which a plurality of mark information items are associated, an image of an area including one or more the recording positions, which correspond to a keyword included in the mark information item including a specification keyword specified by the user out of the plurality of recording positions, as the cut-out image.
(13) The information processing apparatus according to any one of Items (1) to (12), further including
   a metadata generator that generates metadata with respect to the cut-out image generated by the generator.
(14) The information processing apparatus according to any one of Items (1) to (13), in which
   the output unit outputs the output target image with which a mark image is combined as a part or whole of the mark information item.
(15) The information processing apparatus according to Item (14), in which
   the generator cuts out an image of an area having a size including the mark image from the entire image, to thereby generate the cut-out image, and
   the output unit combines the mark image with the generated cut-out image.
(16) The information processing apparatus according to any one of Items (1) to (15), further including:
   an acquisition unit that acquires an information item of an input operation by the user for starting generation of the cut-out image by the generator; and
   a candidate screen generator that generates, when the acquisition unit acquires the information item of the input operation and the generator starts the generation of the cut-out image, a candidate screen for causing the user to select a storage target of the cut-out image.
(17) An information processing apparatus, including:
   an output unit that outputs, out of entire images generated at a plurality of different resolutions with respect to a single target object, at least a partial image of the entire image having an arbitrary resolution to be displayed as an output target image;
   an acquisition unit that obtains an information item of an operation state by a user, which includes at least a position information item in the entire image specified by the user for causing the output unit to output the output target image; and
   a generator that cuts out, out of a plurality of output target images different from each other in at least one of the position information item and an information item of the resolution, which are output by the output unit according to a sequence of continuous or discontinuous specification operations of the user, based on the information item of the operation state obtained by the acquisition unit, at least a partial area of one or more the output target images from the entire image, to thereby generate a cut-out image.
(18) An information processing apparatus, including:
   an output unit that outputs, out of entire images generated at a plurality of different resolutions with respect to a single target object, at least a partial image of the entire image having an arbitrary resolution to be displayed as an output target image;
   a generator that cuts out at least a partial area of the output target image output by the output unit from the entire image according to an input operation by a user, to thereby generate a cut-out image; and
   a recording unit that records a mark information item while the mark information item being associated with a position information item in the entire image and an information item of the resolution of the cut-out image generated by the generator.
(19) An information processing method, including:
   associating, with a position information item in an entire image having an arbitrary resolution out of entire images generated at a plurality of different resolutions with respect to a single target object and an information item of at least the one resolution of the entire image, a mark information item being an additional information item of a user, and stores the position information item and the information item of the resolution with which the mark information item is associated, as information items of a recording position and a recording resolution;
   outputting at least a partial image of the entire image having the arbitrary resolution to be displayed as an output target image; and
   cutting out an image of an area in the output target image, which includes the position information item with which the mark information item is associated, from the output target image, to thereby generate a cut-out image.
(20) An information processing method, including:
   outputting, out of entire images generated at a plurality of different resolutions with respect to a single target object, at least a partial image of the entire image having an arbitrary resolution to be displayed as an output target image;
   obtaining an information item of an operation state by a user, which includes at least a position information item in the entire image specified by the user for outputting the output target image; and
   cutting out, out of a plurality of output target images different from each other in at least one of the position information item and an information item of the resolution, which are output according to a sequence of continuous or discontinuous specification operations of the user, based on the obtained information item of the operation state, at least a partial area of one or more the output target images from the entire image, to thereby generate a cut-out image.
      Further, the present technology may also take the following configuration.
(21) An information processing method, including:
   outputting, out of entire images generated at a plurality of different resolutions with respect to a single target object, at least a partial image of the entire image having an arbitrary resolution to be displayed as an output target image;
   cutting out at least a partial area of the output target image output by the output unit from the entire image according to an input operation by a user, to thereby generate a cut-out image; and
   recording a mark information item while the mark information item being associated with a position information item in the entire image and an information item of the resolution of the generated cut-out image.

In addition, the present technology may also take a configuration as a program by which a computer executes the steps of the above-mentioned information processing methods. Description of Reference Numerals

- 15: observation target object
- 30: cut-out image
- 32, 34: cut-out area
- 52: user operation information acquisition unit
- 53: cut-out image generator
- 55: mark information management unit
- 56: huge image management unit
- 61: candidate screen
- 100: PC
- 101: CPU
- 108: storage unit
- 200: entire image
- 210: output target image
- M: mark image

## Claims

1. An information processing apparatus, comprising:
a storage unit that associates, with a position information item in an entire image having an arbitrary resolution out of entire images generated at a plurality of different resolutions with respect to a single target object and an information item of at least the one resolution of the entire image, a mark information item being an additional information item of a user, and stores the position information item and the information item of the resolution with which the mark information item is associated, as information items of a recording position and a recording resolution;
an output unit that outputs at least a partial image of the entire image having the arbitrary resolution to be displayed as an output target image; and
a generator that cuts out an image of an area in the output target image, which includes the recording position with which the mark information item is associated, from the output target image, to thereby generate a cut-out image.

2. The information processing apparatus according to claim 1, wherein
the generator generates the cut-out image from the output target image having a resolution specified by the user.

3. The information processing apparatus according to claim 1, wherein
the generator generates the cut-out image in a size specified by the user.

4. The information processing apparatus according to claim 1, wherein
the generator cuts out, when an output position group constituting the output target image to be output includes a plurality of recording positions with which a plurality of mark information items are associated, images of areas including information items of the plurality of recording positions from the output target image for each of the plurality of recording positions.

5. The information processing apparatus according to claim 4, wherein
the generator cuts out images of areas including the information item of the plurality of recording positions from the output target image for each of a plurality of recording resolutions corresponding to the plurality of recording positions.

6. The information processing apparatus according to claim 1, wherein
the generator generates, when an output position group constituting the output target image to be output includes a plurality of recording positions with which a plurality of mark information items are associated and at least one recording resolution of a plurality of recording resolutions corresponding to the plurality of recording positions is equal to or larger than an output resolution being the resolution of the output target image, an image of an area including the recording position corresponding to the at least one recording resolution as the cut-out image.

7. The information processing apparatus according to claim 1, wherein
the generator generates, when an output position group constituting the output target image to be output includes a plurality of recording positions with which a plurality of mark information items are associated and an image having a set cut-out size includes the plurality of recording positions, an image of an area including the plurality of recording positions as the single cut-out image.

8. The information processing apparatus according to claim 7, wherein
the generator generates, when a plurality of recording resolutions corresponding to the plurality of recording positions are equal or within a range of a predetermined difference, an image of an area including the plurality of recording positions as the single cut-out image.

9. The information processing apparatus according to claim 7, wherein
the generator generates the cut-out image such that a center of gravity of the plurality of recording positions is a center of the cut-out image.

10. The information processing apparatus according to claim 1, wherein
the storage unit associates the mark information item with each resolution range constituted of at least two resolutions including an output resolution being the resolution of the output target image output by the output unit and stores an information item of the resolution range with which the mark information item is associated, as an information item of a recording resolution range.

11. The information processing apparatus according to claim 1, wherein
the generator generates, when an output position group constituting the output target image to be output includes a plurality of recording positions with which a plurality of mark information items are associated, an image of an area specified by the user, which is an image of an area including at least one recording position with which at least one the mark information item of the plurality of mark information items is associated, as the cut-out image.

12. The information processing apparatus according to claim 1, wherein
the generator generates, when an output position group constituting the output target image to be output includes a plurality of recording positions with which a plurality of mark information items are associated, an image of an area including one or more the recording positions, which correspond to a keyword included in the mark information item including a specification keyword specified by the user out of the plurality of recording positions, as the cut-out image.

13. The information processing apparatus according to claim 1, further comprising
a metadata generator that generates metadata with respect to the cut-out image generated by the generator.

14. The information processing apparatus according to claim 1, wherein
the output unit outputs the output target image with which a mark image is combined as a part or whole of the mark information item.

15. The information processing apparatus according to claim 14, wherein
the generator cuts out an image of an area having a size including the mark image from the entire image, to thereby generate the cut-out image, and
the output unit combines the mark image with the generated cut-out image.

16. The information processing apparatus according to claim 1, further comprising:
an acquisition unit that acquires an information item of an input operation by the user for starting generation of the cut-out image by the generator; and
a candidate screen generator that generates, when the acquisition unit acquires the information item of the input operation and the generator starts the generation of the cut-out image, a candidate screen for causing the user to select a storage target of the cut-out image.

17. An information processing apparatus, comprising:
an output unit that outputs, out of entire images generated at a plurality of different resolutions with respect to a single target object, at least a partial image of the entire image having an arbitrary resolution to be displayed as an output target image;
an acquisition unit that obtains an information item of an operation state by a user, which includes at least a position information item in the entire image specified by the user for causing the output unit to output the output target image; and
a generator that cuts out, out of a plurality of output target images different from each other in at least one of the position information item and an information item of the resolution, which are output by the output unit according to a sequence of continuous or discontinuous specification operations of the user, based on the information item of the operation state obtained by the acquisition unit, at least a partial area of one or more the output target images from the entire image, to thereby generate a cut-out image.

18. An information processing apparatus, comprising:
an output unit that outputs, out of entire images generated at a plurality of different resolutions with respect to a single target object, at least a partial image of the entire image having an arbitrary resolution to be displayed as an output target image;
a generator that cuts out at least a partial area of the output target image output by the output unit from the entire image according to an input operation by a user, to thereby generate a cut-out image; and
a recording unit that records a mark information item while the mark information item being associated with a position information item in the entire image and an information item of the resolution of the cut-out image generated by the generator.

19. An information processing method, comprising:
associating, with a position information item in an entire image having an arbitrary resolution out of entire images generated at a plurality of different resolutions with respect to a single target object and an information item of at least the one resolution of the entire image, a mark information item being an additional information item of a user, and stores the position information item and the information item of the resolution with which the mark information item is associated, as information items of a recording position and a recording resolution;
outputting at least a partial image of the entire image having the arbitrary resolution to be displayed as an output target image; and
cutting out an image of an area in the output target image, which includes the position information item with which the mark information item is associated, from the output target image, to thereby generate a cut-out image.

20. An information processing method, comprising:
outputting, out of entire images generated at a plurality of different resolutions with respect to a single target object, at least a partial image of the entire image having an arbitrary resolution to be displayed as an output target image;
obtaining an information item of an operation state by a user, which includes at least a position information item in the entire image specified by the user for outputting the output target image; and
cutting out, out of a plurality of output target images different from each other in at least one of the position information item and an information item of the resolution, which are output according to a sequence of continuous or discontinuous specification operations of the user, based on the obtained information item of the operation state, at least a partial area of one or more the output target images from the entire image, to thereby generate a cut-out image.
